# EUROPEAN PATENT SPECIFICATION

(11) **EP 4 192 642 B1**
(45) Date of publication and mention of the grant of the patent: **01.10.2025**
(21) Application number: 21763131.6
(22) Date of filing: 05.08.2021
(51) Int. Cl.: B23D 61/18, B28D 1/08

(54) **DIAMOND WIRES FOR CUTTING ROCKS AND SAWING PLANT COMPRISING SUCH WIRES**
DIAMANTDRAHT ZUM SCHNEIDEN VON GESTEIN UND SÄGEANLAGE MIT EINEM SOLCHEN DRAHT
FILS DIAMANTÉS POUR COUPE DE ROCHES ET INSTALLATION DE SCIAGE COMPRENANT DE TEL FILS

(30) Priority: 07.08.2020 IT 202000019750
(43) Date of publication of application: 14.06.2023
(73) Proprietor: Manutec R&D S.r.l., 20832 Desio (IT)
(72) Inventor: CATTANEO, Andrea, 20832 Desio (MB) (IT)
(74) Representative: De Bortoli, Tiziano
(86) International application number: PCT/IB2021/057186
(87) International publication number: WO 2022/029670

(56) References cited:
- EP-A1- 0 773 092
- EP-A2- 0 256 619
- EP-A2- 0 486 238
- WO-A1-98/35778
- WO-A1-99/55506
- IT-A1- LU20 120 017
- JP-A- H0 569 225
- JP-A- H03 108 511
- JP-A- H1 044 132
- JP-A- H10 264 139
- JP-U- S5 251 591
- US-A1- 2012 138 040
- SOVIET INVENTIONS ILLUSTRATED DERWENT, XX, XX, vol. 39, no. 84, 7 November 1984 (1984-11-07), XP002064958

## Description

The present invention relates to a tool for cutting rocks, such as marble or granite. In particular, the present invention relates to diamond wires for stone cutting and to a rock sawing plant comprising such wires.

Currently, marble, just as granite and other rocks, are extracted from respective quarries and transported in the form of large blocks to specific sawing plants where they are cut into the shape of slabs using multi-wire machines. There are also some sawing plants of different type, such as those that use diamond discs, or frames to obtain slabs. However, these plants have been superseded by multi-wire plants due to their indisputable production and economic superiority.

Multi-wire plants are so named as the block of rock is cut, into the desired number of slab-shaped portions, by a plurality of diamond wires. Usually, these wires are moved horizontally by two flywheels that, in addition to rotating around respective axes, driving the wires in horizontal direction, move vertically so that the diamond wires, engaged therewith, translate downward thereby intercepting the block of rock to be cut. The combined effect of the horizontal sliding of the wires and of their vertical movement, subjects the block of rock to a sawing operation by the diamond wires that, in this way, act as cutting tools.

The number of tools mounted on a sawing plant depends on specific needs, such as the thickness of the slabs to be produced and the size of the block to be cut. Notwithstanding this, in general, it can be said that two or more diamond wires are present in a multi-wire plant. As can be easily understood, the greater the number of wires is, the greater the number of slabs produced by the multi-wire plant in the unit of time and, consequently, the greater the productivity of the plant will be.

In multi-wire plants, a fundamental role is performed by the diameter of the diamond wires. In fact, when the diameter of the wire increases this leads to an increase in the thickness of the cut made therewith and consequently of the amount of waste material produced while making the cut, with consequently increase of production costs and of problems linked to environmental impact. For this reason, over the years the diameter of the wire has been progressively reduced from around 11 mm to reach around 5 mm. Unfortunately, however, a reduction of the diameter of the diamond wire translates into a reduction of its mechanical strength, and therefore the diameter of the diamond wire is a delicate parameter that deserves an appropriate study.

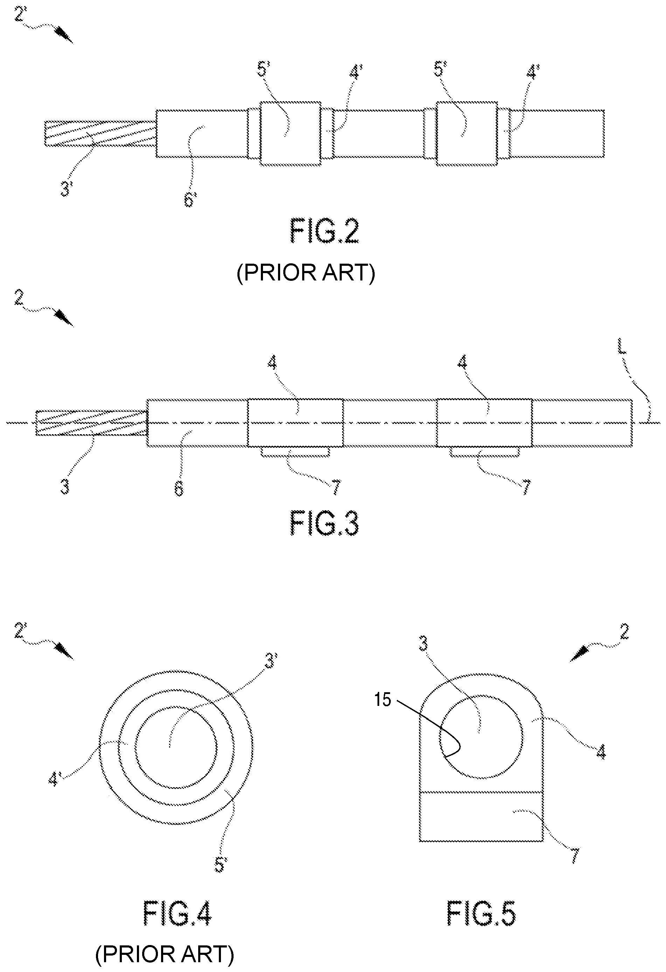

A diamond wire according to the prior art is illustrated in figure 2. The diamond wire 2' comprises an inner metal core, called rope 3', usually made of galvanized steel, and a plurality of cylindrical metal bushings 4', external to and coaxial with the rope. Each bushing 4' is adapted to support a cylindrical diamond strip 5' external to and concentric with it. The bushing 4' can be internally threaded so that it can be made integral in rotation with the metal rope 3'. The diamond strip 5' is obtained by sintering metal powders with synthetic diamond powder. Together, the bushing 4' and the diamond strip 5' form a unit called "bead" in the field of reference. The beads do not cover the whole length of the wire, but they are positioned so as to be equidistant from one another. They are held in position by means of elements 6' made of polymeric material, which is injected so that the beads are made integral with the metal rope 3' both with respect to rotation and to translation.

The stone cutting tools and the related sawing plants currently existing have some drawbacks.

As mentioned previously, a large diameter of the diamond wire generates a large amount of stone waste during the cut. In fact, the thickness of the cut depends on said diameter. If one considers that the wire vibrates during cutting, due to the fact that the rope is a flexible body, and that for this reason a wire with a diameter of 8 mm generates a cut of a thickness of around 9 mm, it is possible to understand how the problem relating to the waste generated by the diameter of the wire is a relevant problem in this field. In fact, a large amount of stone waste generates problems not only of an economic but also of an environmental nature and it is therefore advisable to limit its production as much as possible.

Therefore, operators in the field have always focused on reducing the diameter of the diamond wire. However, a reduction of the diameter of the wire unfortunately involves a reduction of the diameter of the rope, which is the element that carries the wire. For a better understanding of the proportion between these two elements, let us look at the aforesaid example in which the diamond wire has a diameter of 8 mm. In this case, the diameter of the rope is of around 4 mm. With a wire having a diameter of 6 mm, the diameter of the rope is around 3 mm. These values are limit values; in fact, the reduction of the diameter of the rope leads to a reduction of its breaking load and therefore of its duration. Moreover, the rope frays due to the bends caused by the flywheels that guide the wire, as will be seen below. Therefore, an excessive reduction of the diameter of the rope would take its strength to an unacceptable threshold, as it would only be able to withstand a very low number of operating hours.

The diamond strip, i.e., the main actuator of the cut, tends to become worn as cutting operations progress. Therefore, to make the abrasion on its circumference uniform and thus increase is useful life, the aforesaid two driving flywheels are positioned so that the axes are not parallel but belonging to incident straight lines so as to generate a torsion of the wire. In this way, the diamond wire rotates not only around the flywheels, but also around itself, wearing the diamond strip uniformly, as is known in the field. To ensure uniform wear of the tool and thus facilitate its rotation, the wire is also torsionally preloaded.

This configuration produces a problem: if it is true that the diamond strip is worn uniformly, this cannot be said for the flywheels. In fact, although the grooves of the flywheels, inside which the diamond wire runs, are coated with plastic material, during machining they are subject to abrasion due to the friction created between them and the diamond wire. This abrasion is asymmetrical due to the aforesaid configuration of the flywheels, so that the wire is horizontal even if the axes of the flywheels belong to incident straight lines. This non-uniform abrasion of the grooves means that the flywheels have a relatively short useful life.

The diamond wires know to date and the related multi-wire plants produced with them have a further drawback. The diamond strip comprises diamonds of sizes of around 0.2 - 0.4 mm. During machining, the diamonds become progressively detached from the strip. In fact, they remain in position while they are embedded in the metal matrix of material that contains them for at least the 50% of their thickness. As machining progresses, the diamond strip is reduced to a minimum threshold at which the tool must be replaced. This replacement takes place when the thickness of the strip is of around 0.5 mm. Therefore, currently a large amount of scrap material forming the diamond strip is produced.

The reduction of the thickness of the diamond strip, moreover, causes a further drawback: the thickness of the cut varies in time, decreasing as the cutting operations progress. This generates the production of marble or granite slabs with different thicknesses to one another. I.e., the slabs produced with a worn wire are thicker than the slabs produced with a new wire, due to the thickness of the cut that decreases progressively in time. In other words, using the same wire and the same machining parameters to cut two subsequent blocks, slabs of greater thickness will be obtained from the second block with respect to the slabs obtained from the first block.

A diamond wire according to the preamble of claim 1 is known from JP S52 51591 U and a diamond wire according to the preamble of claim 7 is known from JP H10 264139 A.

These considerations show that there is clearly the need to provide a tool for cutting rocks and a related sawing plant that allow the problems cited above to be eliminated or minimized.

The aim of the present invention is therefore to provide a stone cutting tool and related sawing plant that overcomes, or minimizes, the problems of prior art tools and plants.

In particular, within this aim, an object of the present invention is to provide a diamond wire that minimizes the waste of the rock to be cut without decreasing the strength of the wire.

Another object of the present invention is to provide a diamond wire for cutting rocks that minimizes the scrap material forming the diamond strip.

A further object of the present invention is to provide a diamond wire capable of cutting a stone block with a cut of constant thickness.

Yet another object of the subject of the present invention is to produce a diamond wire for cutting stone that allows the useful life of the flywheels of the plant in which it is comprised to be extended.

A further object of the present invention consists in providing a sawing plant with a low amount of rock waste and, at the same time, a long useful life of the diamond wires.

Another object of the present invention is to provide a rock sawing plant provided with flywheels with a long useful life and diamond wires capable of decreasing the amount of material of the unused diamond strip.

One more object of the present invention is to provide a sawing plant capable of producing slabs of constant thickness.

According to a first aspect of the invention there is provided a diamond wire for cutting rocks comprising an inner rope with a circular cross section, provided with a longitudinal axis, and a plurality of metal bodies, each provided with an opening for housing the rope and with at least one outer diamond portion, the metal bodies being longitudinally positioned at predetermined distances, wherein each diamond portion is arranged at least at the portion of diamond wire destined to contact the rock to be cut according to a cutting direction and wherein the cross section of the diamond wire, considered according to a plane orthogonal to the longitudinal axis of said rope and at each diamond portion, extends along a first radius r1 along said cutting direction and along a second radius r2 along a direction perpendicular to the cutting direction, wherein r2 is smaller than r1, said first radius r1 being the distance between said longitudinal axis of said rope and an outer edge of said diamond portion destined to contact the rock to be cut, and said second radius r2 being the greater distance between the longitudinal axis of the rope and the outer edge of the diamond wire along the direction perpendicular to the cutting direction, wherein each metal body comprises a metal bushing, each metal bushing being radially interposed between the rope and each diamond portion and wherein each metal bushing has a cross section in the shape of quadrilateral or of quadrilateral coupled to a circular arc.

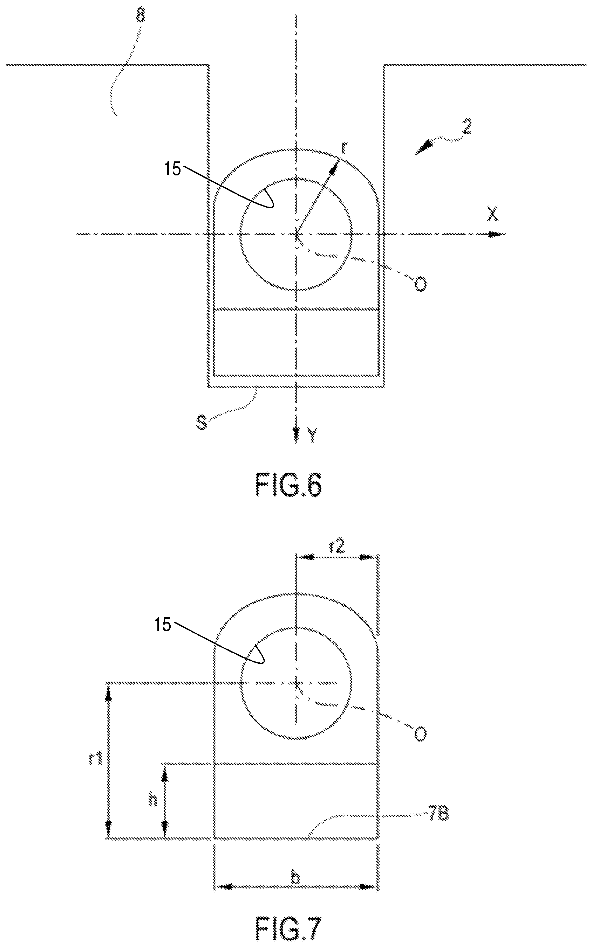

The cutting direction is the direction along which the cut takes place, i.e., the direction with which the diamond wire is progressively inserted into the block of rock to cut it. This direction, in the cases illustrated, substantially coincides with the vertical direction, as visible in figure 6 in which this direction is indicated with the letter Y. Therefore, the direction perpendicular to the cutting direction is substantially horizontal, as shown by the straight line X in the same figure.

In other words, as better described below, the cutting tool according to the invention has a cross section - at the diamond portion - with a radius that is not uniform, as occurs in the prior art, but variable on the plane XY of figure 6. In particular, this cross section, according to the present invention, is not circular in shape, but oblong, i.e. elongated in the cutting direction Y. In this way it is possible to have a reduced extension of the diamond wire in the direction X and thus to reduce the thickness S of the cut, without affecting the efficacy of the cut and without reducing the strength of the diamond wire.

In other words, the Applicant has thought to reduce the diameter of the diamond wire of the prior art not uniformly, as occurred previously, but in a targeted manner, i.e., only along the axis X. In fact, the Applicant has found that by producing a diamond wire with the aforesaid features, it is possible to decrease the thickness S of the cut, and consequently the rock waste, without reducing the diameter of the rope and consequently without reducing the strength of the diamond wire.

The further objects of the present invention, relating to the diamond wire, are achieved by means of a diamond wire that, in addition to the aforesaid features, also has the further feature according to which the diamond portion is provided only at the portion of wire destined to contact the rock to be cut, i.e., in the cases illustrated, only at the lower portion of the cross section.

The Applicant has in fact noted that by applying the diamond portion only on this portion and not on the whole circumference of the wire it is possible to save material forming the diamond strip. This is due to the fact that when the diamond portion reaches the limit thickness, beyond which there is the risk of affecting the cut, the amount of unused material to be scrapped is limited to the extension of the diamond portion and not to the whole surface of the rope or of the bushing.

Moreover, positioning the diamond portion only at the portion of wire destined to contact the block of rock, a constant thickness of cut is obtained due to the fact that the wire does not require to rotate around itself to allow uniform abrasion of the diamond strip and therefore the extension of the wire in the direction X (indicated with the letter b in figure 7) remains constant. In fact, it is only the extension of the diamond portion in direction Y (indicated with h in figure 7) that is consumed progressively as machining progresses, so that the thickness S of the cut is not subject to variations. This leads to the production of slabs of rock with a constant thickness, as explained previously.

The feature according to which the diamond portion is positioned only at the portion of wire that contacts the rock leads to the absence of diamond portion at the portion of wire that contacts the flywheels, i.e., at the upper portion of the cross section represented in the drawings. This results in a greater useful life of the flywheels, as the coating material of the grooves of the flywheels in which the wires run does not come into contact with the abrasive material, i.e., with the diamond portion.

In accordance with preferred embodiments of the invention, the metal body of the wire is formed entirely along the diamond portion.

According to the invention, each metal body of the diamond wire comprises a metal bushing, which is radially interposed between the rope and each diamond portion. The metal bushings are used to support the diamond portion and are inexpensive.

According to the invention, each metal bushing has a cross section in the shape of a quadrilateral coupled to a circular arc. In this way, as the portion of the wire destined to contact the grooves of the flywheels is rounded, it causes less wear of the grooves and consequently the flywheels have a longer useful life. Alternatively, each metal bushing has a cross section in the shape of a quadrilateral. In fact, the combination of the aforesaid features means that the bushing can have a shape other than cylindrical as the diamond wire does not require to rotate around itself. The fact that the wire does not rotate around its axis provides the further advantage of eliminating the internal thread of prior art bushings, with a further reduction of the thickness S of cut.

Advantageously, each diamond portion has a cross section comprising at least one quadrilateral. This shape of the cross section of the diamond portion provides good cut and wear resistance features.

In the preferred embodiments shown in the figures, said cross section of the diamond portion has the shape of a rectangle or of a rectangle coupled to a circular arc. These two shapes have proved to be the best in economic terms.

Preferably, the rope is provided with an external polymeric layer in the longitudinal spaces comprised between one metal body and the next. This polymeric layer defines polymeric elements that act as spacers for the bushings or for the diamond portions and hold them in position.

According to a second aspect of the invention there is provided a diamond wire for cutting rocks comprising an inner rope with oblong cross section according to a direction perpendicular to a cutting direction and a plurality of metal bodies, each provided with a seat, provided with a longitudinal axis, for housing the rope, and with at least one outer diamond portion, the metal bodies being longitudinally positioned at predetermined distances, wherein each diamond portion is arranged at least at the portion of diamond wire destined to contact the rock to be cut according to the cutting direction and wherein the cross section of the diamond wire, considered according to a plane orthogonal to the longitudinal axis of said seat and at each diamond portion, extends along a first radius r1 along said cutting direction and along a second radius r2 along said direction perpendicular to the cutting direction, wherein r2 is smaller than r1, said first radius r1 being the distance between said longitudinal axis of said seat and an outer edge of said diamond portion destined to contact the rock to be cut, and said second radius r2 being the greater distance between the longitudinal axis of the seat and the outer edge of the diamond wire along the direction perpendicular to the cutting direction, wherein each metal body comprises a metal bushing, which is radially interposed between the rope and each diamond portion.

In accordance with preferred embodiments of the invention, the seat for housing the rope with oblong cross section is open on at least one side. This facilitates insertion of the rope inside the seat and allows a saving of material.

In accordance with preferred embodiments of the invention, the rope with oblong cross section comprises at least two superimposed portions. In this way, a diamond wire is obtained with thickness variable according to design requirements. Moreover, no manual splicing operations are required to produce the wire.

In accordance with preferred embodiments of the invention, the rope has a rectangular or elliptical cross section.

In accordance with preferred embodiments, the diamond portion is provided only at the portion of diamond wire destined to contact the rock to be cut. This results in a greater useful life of the flywheels of the sawing plant.

In accordance with preferred embodiments, the metal body is formed entirely along the diamond portion.

In accordance with preferred embodiments, each metal body comprises a metal bushing, which is radially interposed between the rope and each diamond portion.

Advantageously, the shape of the cross section of each diamond portion comprises at least one quadrilateral, preferably a rectangle, even more preferably a rectangle coupled to a circular arc.

In accordance with preferred embodiments, each metal bushing has a cross section in the shape of a quadrilateral or of a quadrilateral coupled to a circular arc.

Preferably, the rope is provided with external polymeric elements, in the longitudinal spaces between one metal body and the next. These polymeric elements act as spacers between the metal bodies, simultaneously holding them in position.

The objects of the present invention relating to a rock sawing plant are achieved by means of a sawing plant comprising a plurality of tools as described above. In particular, a plant as claimed in claim 17 results in low rock waste and, simultaneously, a long useful life of the diamond wires due to the fact that the extension of the wires in the direction X is reduced, but not their strength.

A rock sawing plant also achieves a long useful life of the driving flywheels of the diamond wires and a saving in terms of material forming the diamond strip due to the fact that it comprises wires provided with a diamond portion only at the cutting direction Y. Moreover, such plant is also able to produce slabs with a constant thickness due to the fact that the thickness S of the cuts obtained with wires provided with a diamond portion only at the cutting direction is constant.

The rock sawing plant comprises at least two driving flywheels, adapted to drive the plurality of diamond wires integrally in horizontal direction. The wires are positioned so as to be parallel to one another and the two flywheels are arranged so that their axes are parallel. This last feature results in a greater useful life of the flywheels. In fact, this configuration prevents the asymmetrical abrasion of the flywheels of prior art plants, thereby extending their useful life.

Moreover, said driving flywheels are movable vertically so as to guide the diamond wires, engaged therewith, toward the block of rock to be cut and then inside it. This motion of the flywheels pushes the diamond wires -while they are in horizontal motion between one flywheel and the other - downward so as to penetrate the rock and cut it.

The plant can comprise further wireguide flywheels.

As mentioned previously, in the present context cutting direction refers to the direction along which the cut takes place, so that although the cut takes place both through the horizontal motion of the wire and its vertical motion, the cutting direction is the direction of advance of the cut, which in the cases illustrated is substantially vertical. It is clearly illustrated in figure 6 and is indicated with the letter Y, while the direction perpendicular to the cutting direction Y is substantially horizontal and represented by the straight line X in the same figure 6.

In the present description, the diamond wire is said to be in operating position when it is in contact with the rock. In fact, as it is engaged with two flywheels that drive it horizontally in a first direction (for example from left to right) to then return it in the opposite direction (from right to left), it passes continuously from an operating position (when it is in contact with the rock to be cut) to a position at rest (when it is returned).

In the present context, radius of the diamond wire generally refers to the distance between the longitudinal axis of the rope or the longitudinal axis of the seat for housing the rope and the outermost edge of the diamond wire in the point considered of its cross section, although this is not circular.

Further features and advantages of the present invention will be apparent from the description of some preferred, but not exclusive, embodiments of a tool for cutting rocks and of the related sawing plant according to the invention, illustrated by way of example in the accompanying drawings, wherein:
- figure 1 shows a schematic front view of a first embodiment of a rock sawing plant according to the present invention;
- figure 2 shows a schematic side view of a stone cutting tool of the prior art;
- figure 3 shows a schematic side view of a tool for cutting rocks according to a first embodiment of the present invention;
- figure 4 shows a cross sectional view of the tool of figure 2;
- figure 5 shows a cross sectional view of the tool of figure 3;
- figure 6 shows a schematic view of the tool of figure 5 in operating position, while it is cutting a stone block;
- figure 7 depicts the geometric configuration of the tool of figure 5;
- figure 8 shows a schematic front view of a second embodiment of the rock sawing plant according to the present invention;
- figures 9 - 14 illustrate cross sectional views of tools for cutting rocks in accordance with six different embodiments; and
- figures 15-18 illustrate cross sectional views of tools for cutting rocks in accordance with four further embodiments, in which the inner rope has a rectangular section.

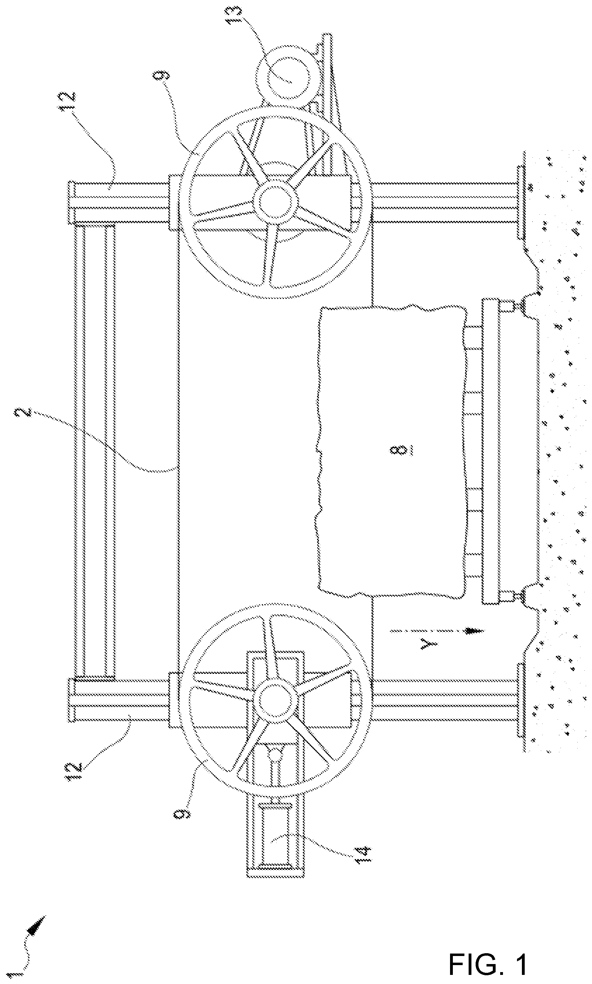

With reference to figures 1 to 18, a plant for cutting rocks such as marble or granite according to the present invention is indicated as a whole with the reference number 1.

The sawing plant 1 comprises at least two driving flywheels 9 on which a plurality of diamond wires 2 are engaged. Each diamond wire 2 is positioned inside a corresponding groove of each driving flywheel 9. The grooves of each driving flywheel 9 are parallel to one another, so that also the diamond wires 2 are arranged parallel, in a known manner.

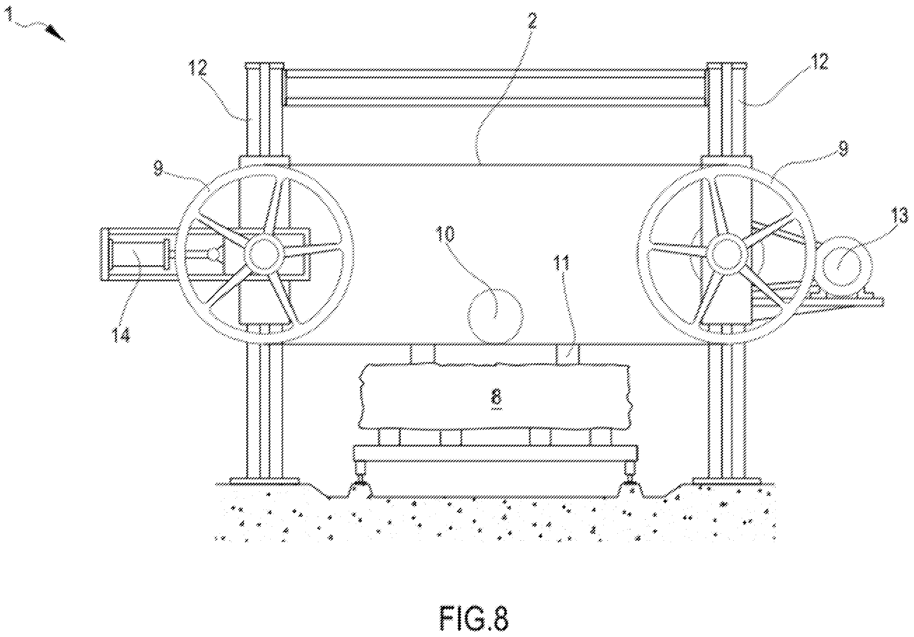

In the embodiments shown in figures 1 and 8, the driving flywheels 9 are arranged horizontally at a predetermined distance. Rotating about their respective axes, they drive the diamond wires 2 integrally in horizontal direction. In particular, each diamond wire 2 is moved horizontally in a first direction between the first and the second driving flywheel 9 to then be moved horizontally in the opposite direction between the second and the first driving flywheel 9. As mentioned previously, the diamond wire 2 is operating while it moves in the first direction and is at rest when it moves in the opposite direction so as to cool down. The driving flywheels 9 move vertically on two vertical guides 12. The vertical movement of the driving flywheels 9 also drives the diamond wires 2 vertically, which are guided so as to move the block of rock 8 to be cut toward them and then to pass through it defining a vertical cutting direction Y.

The horizontal movement of the diamond wires 2 is simultaneous to their vertical movement so as to aid the cutting operation. The horizontal movement speed is greater than the vertical movement speed.

At least one of the two driving flywheels 9 is connected to a motor 13 for its actuation through motion transmission means. Moreover, at least one of the two driving flywheels 9 is connected to tensioning means 14 of the diamond wires 2.

The sawing plant 1 can comprise further wireguide flywheels.

In this particular configuration of the plant 1, the rock 8 is static, i.e., is not moving, but alternative embodiments would be possible in which the block of rock to be cut 8 is moved upward alternatively or in addition to the vertical movement of the diamond wires 2.

In accordance with the present invention, the axes of the driving flywheels 9 are arranged so as to be parallel to one another. This causes a symmetrical abrasion of the grooves of the driving flywheels 9 and consequently a long useful life thereof, as already mentioned.

This configuration of the driving flywheels 9 is made possible by the features of the diamond wire 2 according to the present invention, which shall now be illustrated.

The diamond wire 2 is provided with an inner rope 3, preferably made of galvanized steel or equivalent material, which forms the structure carrying the diamond wire 2. The rope 3 has a circular cross section and extends along a longitudinal axis L. The diamond wire 2 also comprises a plurality of metal bodies, external to the rope 3 and longitudinally positioned at predetermined distances, as known in the field. Each main body 4 comprises an opening 15 for housing the rope 3 and at least one diamond portion 7, which is arranged at least at the portion of diamond wire 2 destined to contact the rock 8 to be cut.

The cross section of the diamond wire 2 considered according to a plane orthogonal to the longitudinal axis L of said rope 3 and at each diamond portion 7, extends along a first radius r1 along said cutting direction Y and along a second radius r2 along a direction X perpendicular to the cutting direction Y, as is clearly visible in figures 6 and 7.

As already mentioned, the radius is the distance between the longitudinal axis L of the rope 3 and the outer edge of the diamond wire 2 in the point considered. When considering the cross section of the diamond wire 2, the longitudinal axis L of the rope 3 consists of a point that defines the center O of the section of the rope 3. This center O is indicated in figures 6, 7 and 9.

The points considered in the present context, i.e., the points of interest, are defined by the two directions X and Y. Each of them crosses the outer edge of the diamond wire 2 in two points. Therefore, these directions define four radii. If the cross section were symmetrical both with respect to the axis X and the axis Y, it would be possible to consider r1 both the radius positioned above (with respect to the center of the axes, which coincides with the center O of the section of the rope 3) in the cross section and the one positioned below and r2 both the radius positioned to the right of the center and the one positioned to its left.

While in the preferred embodiments, in which the cross section is symmetrical with respect to the axis Y but not with respect to the axis X (figures 5, 9-11, 13 and 14), r1 is considered the radius that joins the longitudinal axis L of the rope 3 (i.e. the center O) with the outer edge of the diamond wire 2 at the portion of diamond wire 2 destined to contact the rock 8, along the cutting direction Y. Therefore, the first radius r1 is the distance between the longitudinal axis L of said rope 3, i.e., its center O, and an outer edge 7B of said diamond portion 7 destined to contact the rock 8 to be cut.

In other words, in the specific cases illustrated in the figures, r1 is the radius positioned below and not the radius positioned above in the section, while r2 can be considered both the radius positioned to the right and the one positioned to the left of the center O, as they are equivalent.

In the case in which the cross section is not symmetrical with respect to the axis Y, and the two radii along the direction X are different from each other, r2 would be considered as the major radius between the two. Therefore, the second radius r2 is the greater distance between the longitudinal axis L of the rope 3 (i.e., the center O) and the outer edge of the diamond wire 2 along the direction X perpendicular to the cutting direction Y.

According to the present invention, the second radius r2 of the cross section of the diamond wire 2 is smaller than the first radius r1.

This feature leads to a cross section with a non-uniform but variable radius. In particular, the feature according to which r2 < r1, leads to an oblong section, i.e. elongated in the cutting direction, i.e., along the vertical axis Y and in the cutting direction, i.e. downward in the figures illustrated.

In this way, a reduction of the thickness S of cut does not correspond to a reduction of the diameter of the rope 3. Therefore, with the same mechanical strength, the diamond wire 2 of the present invention allows a reduction of the thickness S of cut and thus a reduction of the rock waste 8 machined with consequent economic and environmental advantages. Otherwise, with the same thickness S of cut, a greater mechanical resistance and thus a longer useful life of the diamond wire 2 are achieved with economic advantages.

In the preferred embodiments, shown in figures 5, 9, 10 and 11, the diamond portion 7 is provided only at the portion of diamond wire 2 destined to contact the rock 8 to be cut, i.e., in the specific drawings, only at a lower portion of the cross section. The absence of diamond portion 7 at the lateral portions of the cross section, i.e., at the sides of the diamond wire 2, results in a further decrease of the thickness S of cut. Instead, the absence of diamond portion 7 at the upper portion, which is the portion destined to contact the grooves of the driving flywheels 9, results in a reduced abrasion of these grooves and thus a longer useful life of the driving flywheels 9 and a reduction of material forming the unused diamond portion 7. Above all, however, this feature results in a constant thickness S of cut, as mentioned previously, as, with reference to figure 7, the thickness b of the cutting edge remains constant as machining progresses. In fact, it is the height h of the diamond portion 7 that is reduced, which does not influence the thickness S of the cut. Therefore, the tool according to the invention results in the production of slabs of constant thickness.

Preferably, each metal body of the diamond wire 2 comprises a metal bushing 4, which acts as a support for the diamond portion 7 and in which the opening 15 for housing the rope 3 is produced.

Each bushing 4 is radially interposed between the rope 3 and each diamond portion 7, as visible in the embodiments illustrated in figures 5 and 9 - 13.

Although the section of the diamond wire 2 is not circular, the radial direction is the direction given by the half line that starts from the center of the rope and extends toward the outside of the wire. It is indicated with the letter r in figure 6.

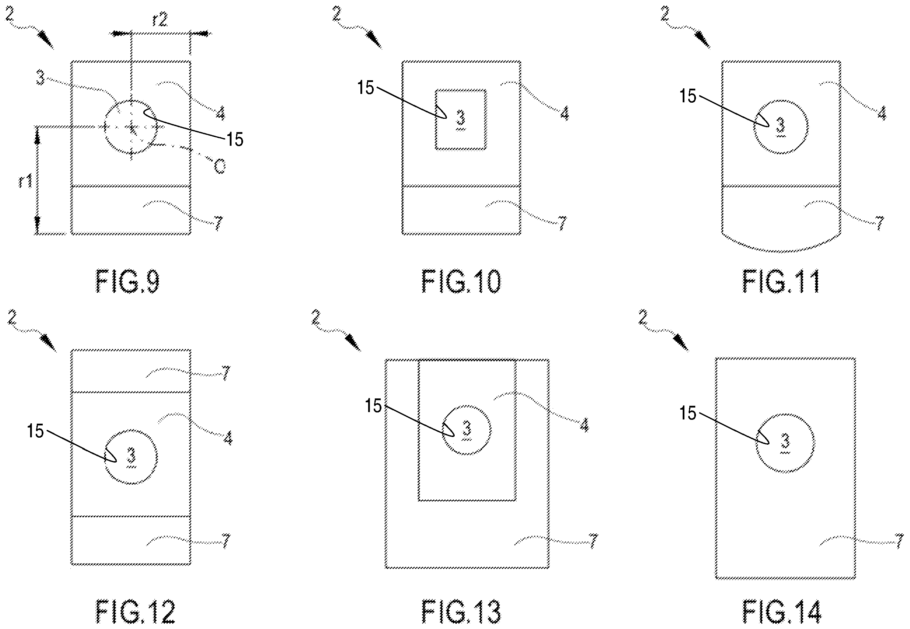

It is also possible for the diamond wire 2 not to be provided with this bushing 4, as can be noted in the embodiment of figure 14, in which case the metal body 4 is formed entirely of a diamond portion 7, obtained by sintering metal powders with synthetic diamond powder.

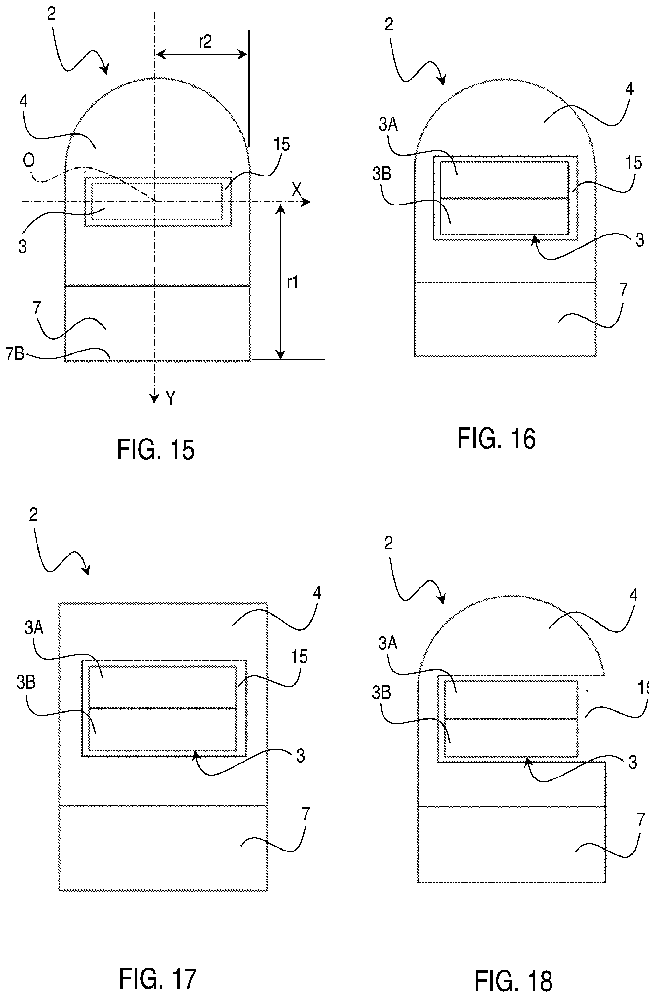

The inner rope 3 has a circular cross section. These ropes are easily available on the market at low cost. However, ropes with non-circular, specifically, rectangular, sections can be provided, as shown in the embodiments of figures 15 to 18.

The opening 15 of the bushing 4 or of the diamond portion 7 through which the rope 3 passes can have the shape of a circle, as in the prior art, or can be square, like the one illustrated in figure 10, or of different shape. This is made possible by the fact that the rope 3 of the invention does not rotate around its longitudinal axis L and does not require an internally threaded bushing.

Preferably, the shape of the cross section of each diamond portion 7 comprises at least one quadrilateral. In particular, in the embodiments of figures 5, 9, 10 and 14, this cross section is of rectangular type, so that the diamond portion 7 has the shape of a parallelepiped; in the embodiment of figure 12 it comprises two symmetrical rectangles positioned with respect to the axis X, so that the diamond portion 7 comprises two half portions, each in the shape of a parallelepiped; in the embodiment of figure 11 it has the shape of a quadrilateral coupled to a circular arc so that the diamond portion 7 has the shape of a convex solid; and in the embodiment of figure 13 this section has the shape of a double L so that the diamond portion 7 has the shape of an internally hollow parallelepiped. In this last embodiment, the diamond portion 7 is positioned not only at the portion of diamond wire 2 destined to contact the rock 8, but also at the lateral portions of this diamond wire 2.

In the embodiments illustrated, although the thickness b of the diamond portion 7 is the same as the thickness, in the same direction, of the bushing 4, it could however be greater. The longitudinal extension of the diamond portion 7, in the embodiment of figure 3, is smaller than the longitudinal extension of the bushing 4. However, the two extensions could be the same.

The metal bushing 4 can have a cross section in the shape of a quadrilateral, as in the embodiments of figures 9 - 13 or of a quadrilateral coupled to a circular arc, as in the embodiment of figure 5.

The rope 3 is provided with polymeric elements 6 external to the rope 3 in the longitudinal spaces between one metal body 4 and the next, in a known manner. These elements 6 are preferably made of polyurethane.

Preferably, a metal body 4 is produced as follows. Firstly, the metal powder is mixed with synthetic diamond powder and then the mixture is compacted using cold compaction. The mixture is then sintered around the bushing 4 or directly around the rope 3. The diamond mixture contracts as a result of sintering, thereby binding to the bushing 4 or to the rope 3. In a second production step, a silver alloy element is positioned on a portion of the bushing 4 or of the rope 3 and taken to a temperature of 500-600 C°. Through heating, this element produces a brazing between the bushing 4 or the rope 3 and the sintered part, filling the porosities inside the diamond alloy.

Figures 15 to 18 illustrate a diamond wire 2 according to four further embodiments of the present invention, which differ from those described above due to the fact that it has an inner rope 3 with oblong cross section according to a direction X perpendicular to a cutting direction Y, precisely rectangular, instead of circular.

Naturally, the rope can have a cross section other than the perfectly rectangular one show in the figures, for example rectangular with rounded edges, rectangular with concave and/or convex short and/or long sides, elliptical or any other oblong shape suitable for the purpose.

The diamond wire 2 then comprises a plurality of metal bodies 4, each provided with a seat 15, provided with a longitudinal axis, for housing the rope 3, and with at least one outer diamond portion 7. The metal bodies 4 are longitudinally positioned at predetermined distances and each diamond portion 7 is arranged at least at the portion of diamond wire 2 destined to contact the rock 8 to be cut.

The cross section of the diamond wire 2 considered according to a plane orthogonal to the longitudinal axis of the seat 15 and at each diamond portion 7, extends along a first radius r1 along said cutting direction Y and along a second radius r2 along said direction X perpendicular to the cutting direction Y, as is clearly visible in figure 15.

As mentioned previously, the radius is the distance between the longitudinal axis of the seat 15 and the outer edge of the diamond wire 2 in the point considered. When considering the cross section of the diamond wire 2, the longitudinal axis of the seat 15 consists of a point that defines the center O of the section of the seat 15. This center O is indicated in figure 15.

In the embodiments illustrated in figures 15-18, the cross section is symmetrical with respect to the axis Y but not with respect to the axis X, in which case r1 is considered the radius that joins the longitudinal axis of the seat 15 (i.e. the center O) with the outer edge of the diamond wire 2 at the portion of diamond wire 2 destined to contact the rock 8, along the cutting direction Y. Therefore, the first radius r1 is the distance between the longitudinal axis of the seat 15, i.e., its center O, and an outer edge 7B of the diamond portion 7 destined to contact the rock 8 to be cut.

Instead, if the cross section were symmetrical both with respect to the axis X and the axis Y, it would be possible to consider r1 both the radius positioned above (with respect to the center of the axes, which coincides with the center O of the section of the seat 15) in the cross section and the one positioned below and r2 both the radius positioned to the right of the center and the one positioned to its left.

In other words, in the specific cases illustrated in the figures, r1 is the radius positioned below and not the radius positioned above in the section, while it is possible to consider both the radius positioned to the right and the one positioned to the left of the center O as r2, as they are equivalent.

In the case in which the cross section is not symmetrical with respect to the axis Y, and the two radii along the direction X are different from each other, r2 is considered as the greater radius between the two, so that the second radius r2 is the greater distance between the longitudinal axis of the seat 15 (i.e., the center O) and the outer edge of the diamond wire 2 along the direction X perpendicular to the cutting direction Y.

Once again, the second radius r2 of the cross section of the diamond wire 2 is smaller than the first radius r1.

This feature leads to a cross section with a non-uniform, but variable, radius. In particular, the feature according to which r2 < r1 leads to an oblong section, i.e., elongated in the cutting direction, i.e., along the vertical axis Y and in the cutting direction, i.e., downward in the figures illustrated.

In the preferred embodiments, shown in figures 16-18, the rope 3 comprises a plurality of superimposed portions, for example two superimposed portions 3A and 3B, which are housed in the seat 15 of each metal body 4 until reaching the desired diameter for the diamond wire 2 or until the friction created by the number of superimposed portions inside each seat 15 prevents further movements.

The number of the portions 3A and 3B to be housed inside each seat 15 can be calculated in advance in relation to the size of the seat and to the size of the rope 3. In particular, the larger the size of the seat 15 is, the larger the number of portions to be inserted inside it will be. Vice versa, the larger the size of the rope 3 is, the smaller the number of portions to be housed inside the seat 15 will be. The portions 3A and 3B of the rope 3 are therefore housed inside each seat 15 positioned so as to be arranged substantially parallel to one another.

In the embodiment illustrated in figure 16, the seat 15 for housing the rope 3 is open on one side, so as to allow easy and rapid insertion of the rope 3 inside the seat.

In the embodiments illustrated in figures 15-18, each metal body of the diamond wire 2 comprises a metal bushing 4, in which there is produced the seat 15 for housing the rope 3, which acts as support for the diamond portion 7. Alternatively, the metal body 4 is formed entirely of diamond portion 7, obtained through sintering metal powders with synthetic diamond powder.

Preferably, the shape of the cross section of each diamond portion 7 comprises at least one quadrilateral. In particular, in the embodiments illustrated in figures 15-18, this cross section is of rectangular type.

The metal bushing 4 can have a cross section in the shape of a quadrilateral, as in the embodiment of figure 17, or of a quadrilateral coupled to a circular arc, as in the embodiments of figures 15, 16 and 18.

Moreover, the rope 3 is provided, in a known manner, with polymeric elements 6 (figure 3), external to the rope, preferably made of polyurethane, in the longitudinal spaces between one metal body 4 and the next.

The sawing plant 1 in accordance with the embodiment shown in figure 8 comprises, in addition to the two driving flywheels 9, a further flywheel 10, interposed between said two driving flywheels 9. This further flywheel 10 is adapted to guide the diamond wires 2 so that the diamond portions 7 orthogonally intercept a pair of guide parallelepipeds 11 placed above the block of rock 8 to be cut. In other words, to prevent the vibrations from causing a slight rotation of the diamond wire 2 preventing the diamond portion 7 from intercepting the rock 8 orthogonally, the diamond wires 2 are pushed by the further flywheel 10 toward the guide parallelepipeds 11 that block them in position.

With the same purpose of ensuring that the diamond portion 7 of the diamond wire 2 contacts the block of rock 8 orthogonally, the plant 1 can comprise support means of the block of rock 8 which are adapted to support the block so that it is inclined with respect to the diamond wires 2. In this way, the block of rock 8 is cut firstly at one edge so that this edge acts as guide for the rest of the cutting operation.

As can be understood from the description provided, the technical solutions adopted for the stone cutting tool and for the sawing plant according to the present invention fully achieve the intended aims and objects.

The diamond wire 2 and the rock sawing plant 1 thus conceived are susceptible to numerous possible variants, all falling within the scope of the present invention. For example, the diamond wire 2 could undergo slight modifications in order to adapt to specific types of rock. Moreover, the diamond wires 2 and/or the block of rock 8 to be cut could be moved horizontally, so as to define a horizontal rather than vertical cutting direction.

Although the diamond wire 2 has been conceived to cut blocks of rock 8 so as to obtain slabs therefrom, it could also be used in quarries to obtain large blocks or in sawmills for squaring the blocks.

The materials used and the contingent dimensions and shapes can be any according to requirements and to the state of the art.

In the cases illustrated, the diamond wire 2 acts as cutting tool; however, it would be possible to provide diamond wire tools other than those illustrated, all falling within the scope of protection of the present invention, as defined by the claims.

## Claims

1. Diamond wire (2) for cutting rocks (8) comprising an inner rope (3) with a circular cross section, provided with a longitudinal axis (L), and a plurality of metal bodies (4), each provided with an opening (15) for housing the rope (3) and with at least one outer diamond portion (7), the metal bodies (4) being longitudinally positioned at predetermined distances, wherein each diamond portion (7) is arranged at least at the portion of diamond wire (2) destined to contact the rock (8) to be cut according to a cutting direction (Y) and wherein the cross section of the diamond wire (2), considered according to a plane orthogonal to the longitudinal axis (L) of said rope (3) and at each diamond portion (7), extends along a first radius r1 along said cutting direction (Y) and along a second radius r2 along a direction (X) perpendicular to the cutting direction (Y), wherein r2 is smaller than r1, said first radius r1 being the distance between said longitudinal axis (L) of said rope (3) and an outer edge (7B) of said diamond portion (7) destined to contact the rock (8) to be cut, and said second radius r2 being the greater distance between the longitudinal axis (L) of the rope (3) and the outer edge of the diamond wire (2) along the direction (X) perpendicular to the cutting direction (Y), wherein each metal body comprises a metal bushing (4), each metal bushing (4) being radially interposed between the rope (3) and each diamond portion (7) and **characterized in that** each metal bushing (4) has a cross section in the shape of quadrilateral or of quadrilateral coupled to a circular arc.

2. Diamond wire (2) according to claim 1, wherein the diamond portion (7) is provided only at the portion of diamond wire (2) destined to contact the rock (8) to be cut.

3. Diamond wire (2) according to claim 1, wherein the metal body (4) is formed entirely along the diamond portion (7).

4. Diamond wire (2) according to one of the preceding claims, wherein the shape of the cross section of each diamond portion (7) comprises at least one quadrilateral.

5. Diamond wire (2) according to claim 4, wherein said cross section of the diamond portion (7) has the shape of a rectangle or of a rectangle coupled to a circular arc.

6. Diamond wire (2) according to one of the preceding claims, wherein the rope (3) is provided with polymeric elements (6) external thereto, in the longitudinal spaces between one metal body (4) and the next.

7. Diamond wire (2) for cutting rocks (8) comprising an inner rope (3) with oblong cross section according to a direction (X) perpendicular to a cutting direction (Y) and a plurality of metal bodies (4), each provided with a seat (15), provided with a longitudinal axis, for housing the rope (3), and with at least one outer diamond portion (7), the metal bodies being longitudinally positioned at predetermined distances, wherein each diamond portion (7) is arranged at least at the portion of diamond wire (2) destined to contact the rock (8) to be cut according to the cutting direction (Y) and **characterized in that** the cross section of the diamond wire (2), considered according to a plane orthogonal to the longitudinal axis of said seat (15) and at each diamond portion (7), extends along a first radius r1 along said cutting direction (Y) and along a second radius r2 along said direction (X) perpendicular to the cutting direction (Y), wherein r2 is smaller than r1, said first radius r1 being the distance between said longitudinal axis of said seat (15) and an outer edge (7B) of said diamond portion (7) destined to contact the rock (8) to be cut, and said second radius r2 being the greater distance between the longitudinal axis of the seat (15) and the outer edge of the diamond wire (2) along the direction (X) perpendicular to the cutting direction (Y), wherein each metal body comprises a metal bushing (4), which is radially interposed between the rope (3) and each diamond portion (7).

8. Diamond wire (2) according to claim 7, wherein said seat (15) for housing the rope (3) with oblong cross section is open on at least one side.

9. Diamond wire (2) according to claim 7 or 8, wherein said rope (3) with oblong cross section comprises at least two superimposed portions (3A, 3B).

10. Diamond wire (2) according to one of claims 7 to 9, wherein the oblong cross section of the rope (3) is a rectangular or elliptical cross section.

11. Diamond wire (2) according to one of claims 7 to 10, wherein the diamond portion (7) is provided only at the portion of diamond wire (2) destined to contact the rock (8) to be cut.

12. Diamond wire (2) according to one of claims 7 to 10, wherein the metal body (4) is formed entirely along the diamond portion (7).

13. Diamond wire (2) according to one of claims 7 to 12, wherein the shape of the cross section of each diamond portion (7) comprises at least one quadrilateral.

14. Diamond wire (2) according to claim 13, wherein said cross section of the diamond portion (7) has the shape of a rectangle or of a rectangle coupled to a circular arc.

15. Diamond wire (2) according to one of claims 7 to 14, when dependent on claim 12, wherein each metal bushing (4) has a cross section in the shape of quadrilateral or of quadrilateral coupled to a circular arc.

16. Diamond wire (2) according to one of claims 7 to 15, wherein the rope (3) is provided with external polymeric elements (6), in the longitudinal spaces between one metal body (4) and the next.

17. Sawing plant (1) comprising at least two driving flywheels (9) adapted to drive, integrally in horizontal direction, a plurality of diamond wires (2) according to any one of claims 1 to 16 , these diamond wires (2) being positioned so as to be parallel to one another, and said driving flywheels (9) being movable vertically so as to guide the diamond wires (2), engaged therewith, toward the block of rock (8) to be cut and then inside it, wherein said two driving flywheels (9) are arranged so that their axes are parallel.

## Patentansprüche

1. Diamantdraht (2) zum Schneiden von Gestein (8), der ein inneres Seil (3) mit einem kreisförmigen Querschnitt, das mit einer Längsachse (L) bereitgestellt ist, und eine Vielzahl von Metallkörpern (4), die jeweils mit einer Öffnung (15) zum Aufnehmen des Seils (3) und mit mindestens einem äußeren Diamantabschnitt (7) bereitgestellt sind, umfasst, wobei die Metallkörper (4) in Längsrichtung in vorbestimmten Abständen positioniert sind, wobei jeder Diamantabschnitt (7) mindestens an dem Abschnitt des Diamantdrahts (2) angeordnet ist, der dazu bestimmt ist, das zu schneidende Gestein (8) gemäß einer Schneidrichtung (Y) zu berühren, und wobei sich der Querschnitt des Diamantdrahts (2), gemäß einer Ebene orthogonal zur Längsachse (L) des Seils (3) und an jedem Diamantabschnitt (7) betrachtet, entlang eines ersten Radius r1 entlang der Schneidrichtung (Y) und entlang eines zweiten Radius r2 entlang einer Richtung (X) senkrecht zur Schneidrichtung (Y) erstreckt, wobei r2 kleiner als r1 ist, wobei der erste Radius r1 der Abstand zwischen der Längsachse (L) des Seils (3) und einer Außenkante ist (7B) des Diamantabschnitts (7) ist, der dazu bestimmt ist, das zu schneidende Gestein (8) zu berühren, und der zweite Radius r2 der größere Abstand zwischen der Längsachse (L) des Seils (3) und der Außenkante des Diamantdrahts (2) entlang der Richtung (X) senkrecht zur Schneidrichtung (Y) ist, wobei jeder Metallkörper eine Metallbuchse (4) umfasst, wobei jede Metallbuchse (4) radial zwischen dem Seil (3) und jedem Diamantabschnitt (7) eingefügt ist und **dadurch gekennzeichnet ist, dass** jede Metallbuchse (4) einen Querschnitt in der Form eines Vierecks oder eines mit einem Kreisbogen gekoppelten Vierecks aufweist.

2. Diamantdraht (2) nach Anspruch 1, wobei der Diamantabschnitt (7) nur am Abschnitt des Diamantdrahts (2), der dazu bestimmt ist, das zu schneidende Gestein (8) zu berühren, bereitgestellt ist.

3. Diamantdraht (2) nach Anspruch 1, wobei der Metallkörper (4) vollständig entlang des Diamantabschnitts (7) gebildet ist.

4. Diamantdraht (2) nach einem der vorstehenden Ansprüche, wobei die Form des Querschnitts jedes Diamantabschnitts (7) mindestens ein Viereck umfasst.

5. Diamantdraht (2) nach Anspruch 4, wobei der Querschnitt des Diamantabschnitts (7) die Form eines Rechtecks oder eines mit einem Kreisbogen gekoppelten Rechtecks aufweist.

6. Diamantdraht (2) nach einem der vorstehenden Ansprüche, wobei das Seil (3) in den Längsräumen zwischen einem Metallkörper (4) und dem nächsten außerhalb dazu mit Polymer-Elementen (6) bereitgestellt ist.

7. Diamantdraht (2) zum Schneiden von Gestein (8), der ein inneres Seil (3) mit einem länglichen Querschnitt gemäß einer Richtung (X) senkrecht zu einer Schneidrichtung (Y) und eine Vielzahl von Metallkörpern (4), die jeweils mit einem Sitz (15), der mit einer Längsachse bereitgestellt ist, zum Aufnehmen des Seils (3), und mit mindestens einem äußeren Diamantabschnitt (7) bereitgestellt sind, umfasst, wobei die Metallkörper in Längsrichtung in vorbestimmten Abständen positioniert sind, wobei jeder Diamantabschnitt (7) mindestens an dem Abschnitt des Diamantdrahts (2) angeordnet ist, der dazu bestimmt ist, das zu schneidende Gestein (8) gemäß der Schneidrichtung (Y) zu berühren, und **dadurch gekennzeichnet, dass** sich der Querschnitt des Diamantdrahts (2), gemäß einer Ebene orthogonal zur Längsachse des Sitzes (15) und an jedem Diamantabschnitt (7) betrachtet, entlang eines ersten Radius r1 entlang der Schneidrichtung (Y) und entlang eines zweiten Radius r2 entlang der Richtung (X) senkrecht zur Schneidrichtung (Y) erstreckt, wobei r2 kleiner als r1 ist, wobei der erste Radius r1 der Abstand zwischen der Längsachse des Sitzes (15) und einer Außenkante (7B) des Diamantabschnitts (7) ist, der dazu bestimmt ist, das zu schneidende Gestein (8) zu berühren, und der zweite Radius r2 der größere Abstand zwischen der Längsachse (L) des Seils (3) und der Außenkante des Diamantdrahts (2) entlang der Richtung (X) senkrecht zur Schneidrichtung (Y) ist, wobei jeder Metallkörper eine Metallbuchse (4) umfasst, die radial zwischen dem Seil (3) und jedem Diamantabschnitt (7) eingefügt ist.

8. Diamantdraht (2) nach Anspruch 7, wobei der Sitz (15) zum Aufnehmen des Seiles (3) mit länglichem Querschnitt an mindestens einer Seite offen ist.

9. Diamantdraht (2) nach Anspruch 7 oder 8, wobei das Seil (3) mit länglichem Querschnitt mindestens zwei übereinanderliegende Abschnitte (3A, 3B) umfasst.

10. Diamantdraht (2) nach einem der Ansprüche 7 bis 9, wobei der längliche Querschnitt des Seils (3) ein rechteckiger oder elliptischer Querschnitt ist.

11. Diamantdraht (2) nach einem der Ansprüche 7 bis 10, wobei der Diamantabschnitt (7) nur an dem Abschnitt des Diamantdrahts (2), der dazu bestimmt ist, das zu schneidende Gestein (8) zu berühren, bereitgestellt ist.

12. Diamantdraht (2) nach einem der Ansprüche 7 bis 10, wobei der Metallkörper (4) vollständig entlang des Diamantabschnitts (7) gebildet ist.

13. Diamantdraht (2) nach einem der Ansprüche 7 bis 12, wobei die Form des Querschnitts jedes Diamantabschnitts (7) mindestens ein Viereck umfasst.

14. Diamantdraht (2) nach Anspruch 13, wobei der Querschnitt des Diamantabschnitts (7) die Form eines Rechtecks oder eines mit einem Kreisbogen gekoppelten Rechtecks aufweist.

15. Diamantdraht (2) nach einem der Ansprüche 7 bis 14, wenn von Anspruch 12 abhängig, wobei jede Metallbuchse (4) einen Querschnitt in der Form eines Vierecks oder eines mit einem Kreisbogen gekoppelten Vierecks aufweist.

16. Diamantdraht (2) nach einem der Ansprüche 7 bis 15, wobei das Seil (3) in den Längsräumen zwischen einem Metallkörper (4) und dem nächsten mit äußeren Polymer-Elementen (6) bereitgestellt ist.

17. Sägeanlage (1), die mindestens zwei Antriebsschwungräder (9) umfasst, die angepasst sind, um integral in horizontaler Richtung eine Vielzahl von Diamantdrähten (2) nach einem der Ansprüche 1 bis 16 anzutreiben, wobei diese Diamantdrähte (2) positioniert sind, um parallel zueinander zu sein und die Antriebsschwungräder (9) vertikal bewegbar sind, um damit in Eingriff stehende Diamantdrähte (2) in Richtung des zu schneidenden Gesteinsblocks (8) zu führen und dann darin einzugreifen, wobei die beiden Antriebsschwungräder (9) angeordnet sind, sodass ihre Achsen parallel sind.

## Revendications

1. Fil diamanté (2) pour découper des roches (8), comprenant un câble interne (3) avec une section transversale circulaire, pourvu d'un axe longitudinal (L), et une pluralité de corps métalliques (4), dotés chacun d'une ouverture (15) pour loger le câble (3) et d'au moins une partie diamantée externe (7), les corps métalliques (4) étant positionnés longitudinalement à des distances prédéterminées, dans lequel chaque partie diamantée (7) est agencée au moins au niveau de la partie du câble diamanté (2) destinée à être en contact avec la roche (8) à découper selon une direction de découpe (Y), et dans lequel la section transversale du fil diamanté (2), considérée selon un plan orthogonal à l'axe longitudinal (L) dudit câble (3) et au niveau de chaque partie diamantée (7), s'étend le long d'un premier rayon r1 le long de ladite direction de découpe (Y) et le long d'un second rayon r2 le long d'une direction (X) perpendiculaire à la direction de découpe (Y), dans lequel r2 est plus petit que r1, ledit premier rayon r1 étant la distance entre ledit axe longitudinal (L) dudit câble (3) et un bord externe (7B) de ladite partie diamantée (7) destinée à être en contact avec la roche (8) à découper, et ledit second rayon r2 étant la distance plus grande entre l'axe longitudinal (L) du câble (3) et le bord externe du fil diamanté (2) le long de la direction (X) perpendiculaire à la direction de découpe (Y), dans lequel chaque corps métallique comprend une douille métallique (4), chaque douille métallique (4) étant intercalée radialement entre le câble (3) et chaque partie diamantée (7) et **caractérisé en ce que** chaque douille métallique (4) présente une section transversale en forme de quadrilatère ou de quadrilatère couplé à un arc de cercle.

2. Fil diamanté (2) selon la revendication 1, dans lequel la partie diamantée (7) est prévue uniquement au niveau de la partie du fil diamanté (2) destinée à être en contact avec la roche (8) à découper.

3. Fil diamanté (2) selon la revendication 1, dans lequel le corps métallique (4) est formé entièrement le long de la partie diamantée (7).

4. Fil diamanté (2) selon l'une des revendications précédentes, dans lequel la forme de la section transversale de chaque partie diamantée (7) comprend au moins un quadrilatère.

5. Fil diamanté (2) selon la revendication 4, dans lequel ladite section transversale de la partie diamantée (7) présente la forme d'un rectangle ou d'un rectangle couplé à un arc de cercle.

6. Fil diamanté (2) selon l'une des revendications précédentes, dans lequel le câble (3) est pourvu d'éléments polymères (6) externes à celui-ci, dans les espaces longitudinaux entre un corps métallique (4) et le suivant.

7. Fil diamanté (2) pour découper des roches (8), comprenant un câble interne (3) avec une section transversale oblongue selon une direction (X) perpendiculaire à une direction de découpe (Y), et une pluralité de corps métalliques (4), dotés chacun d'un siège (15) doté d'un axe longitudinal pour loger le câble (3), et d'au moins une partie diamantée externe (7), les corps métalliques étant positionnés longitudinalement à des distances prédéterminées, dans lequel chaque portion diamantée (7) est agencée au moins au niveau de la partie du fil diamanté (2) destinée à être en contact avec la roche (8) à découper selon la direction de découpe (Y) et **caractérisé en ce que** la section du fil diamanté (2), considérée selon un plan orthogonal à l'axe longitudinal dudit siège (15) et au niveau de chaque partie diamantée (7), s'étend le long d'un premier rayon r1 le long de ladite direction de découpe (Y) et le long d'un second rayon r2 le long de ladite direction (X) perpendiculaire à la direction de découpe (Y), dans lequel r2 est plus petit que r1, ledit premier rayon r1 étant la distance entre ledit axe longitudinal dudit siège (15) et un bord externe (7B) de ladite partie diamantée (7) destinée à être en contact avec la roche (8) à découper, et ledit second rayon r2 étant la distance plus grande entre l'axe longitudinal du siège (15) et le bord externe du fil diamanté (2) le long de la direction (X) perpendiculaire à la direction de découpe (Y), dans lequel chaque corps métallique comprend une douille métallique (4), qui est intercalée radialement entre le câble (3) et chaque partie diamantée (7).

8. Fil diamanté (2) selon la revendication 7, dans lequel ledit siège (15) pour loger le câble (3) avec une section transversale oblongue est ouvert sur au moins un côté.

9. Fil diamanté (2) selon la revendication 7 ou 8, dans lequel ledit câble (3) avec une section transversale oblongue comprend au moins deux parties superposées (3A, 3B).

10. Fil diamanté (2) selon l'une des revendications 7 à 9, dans lequel la section transversale oblongue du câble (3) est une section transversale rectangulaire ou elliptique.

11. Fil diamanté (2) selon l'une des revendications 7 à 10, dans lequel la partie diamantée (7) est prévue uniquement au niveau de la partie du fil diamanté (2) destinée à être en contact avec la roche (8) à découper.

12. Fil diamanté (2) selon l'une des revendications 7 à 10, dans lequel le corps métallique (4) est formé entièrement le long de la partie diamantée (7).

13. Fil diamanté (2) selon l'une des revendications 7 à 12, dans lequel la forme de la section transversale de chaque partie diamantée (7) comprend au moins un quadrilatère.

14. Fil diamanté (2) selon la revendication 13, dans lequel ladite section transversale de la partie diamantée (7) présente la forme d'un rectangle ou d'un rectangle couplé à un arc de cercle.

15. Fil diamanté (2) selon l'une des revendications 7 à 14, lorsqu'elle dépend de la revendication 12, dans lequel chaque douille métallique (4) présente une section transversale en forme de quadrilatère ou de quadrilatère couplé à un arc de cercle.

16. Fil diamanté (2) selon l'une des revendications 7 à 15, dans lequel le câble (3) est pourvu d'éléments polymères externes (6), dans les espaces longitudinaux entre un corps métallique (4) et le suivant.

17. Installation de sciage (1) comprenant au moins deux volants d'entraînement (9) adaptés pour entraîner, intégralement dans une direction horizontale, une pluralité de fils diamantés (2) selon l'une quelconque des revendications 1 à 16, ces fils diamantés (2) étant positionnés de manière à être parallèles les uns aux autres, et lesdits volants d'entraînement (9) pouvant se déplacer verticalement de manière à guider les fils diamantés (2), en prise avec ceux-ci, vers le bloc de roche (8) à découper et, ensuite, à l'intérieur de celui-ci, dans laquelle lesdits deux volants d'entraînement (9) sont agencés de telle sorte que leurs axes soient parallèles.
